# EUROPEAN PATENT SPECIFICATION

(11) **EP 2 718 594 B1**
(45) Date of publication and mention of the grant of the patent: **20.05.2015**
(21) Application number: 11730069.9
(22) Date of filing: 07.06.2011
(51) Int. Cl.: F16J 15/12, B60J 10/00

(54) **TRIMMING FRAMEWORK, MANUFACTURING METHOD AND ASSOCIATED DEVICE**
BESCHNEIDUNGSRAHMEN, HERSTELLUNGSVERFAHREN UND ZUGEHÖRIGE VORRICHTUNG
STRUCTURE D'HABILLAGE, PROCÉDÉ DE FABRICATION ET DISPOSITIF ASSOCIÉ

(43) Date of publication of application: 16.04.2014
(73) Proprietor: FILMAR S.r.l., 10072 Caselle Torinese (TO) (IT)
(72) Inventor: MARTINETTO, Filiberto, I-10072 Caselle Torinese (TO) (IT)
(74) Representative: Vitillo, Giuseppe
(86) International application number: PCT/IB2011/001342
(87) International publication number: WO 2012/168751

(56) References cited:
- EP-A2- 1 953 279

## Description

The present invention refers to a trimming/gasket framework, method of production and related device.

The present invention shall particularly, but not exclusively, refer to a gasket framework for vehicles comprising a shaped rubber extruded to the framework. However, gaskets incorporating the framework subject of the present invention may be equally used for doors for refrigerators etc.

Generally, woven frameworks, comprising a warp made of polyester material, and a weft made of a metal thread so as to form a strip, which is subsequently U-folded to be extruded together with the shaped rubber of the gasket, are known.

The latest regulations regarding environmental protection have lead to the gradual replacement of components that are difficult to dispose and, analogously, an easier disposal of the previously described frameworks has been required.

A gasket framework woven and comprising a warp, made of polyester material, and a weft made of synthetic material is known from EP-A-1953279.

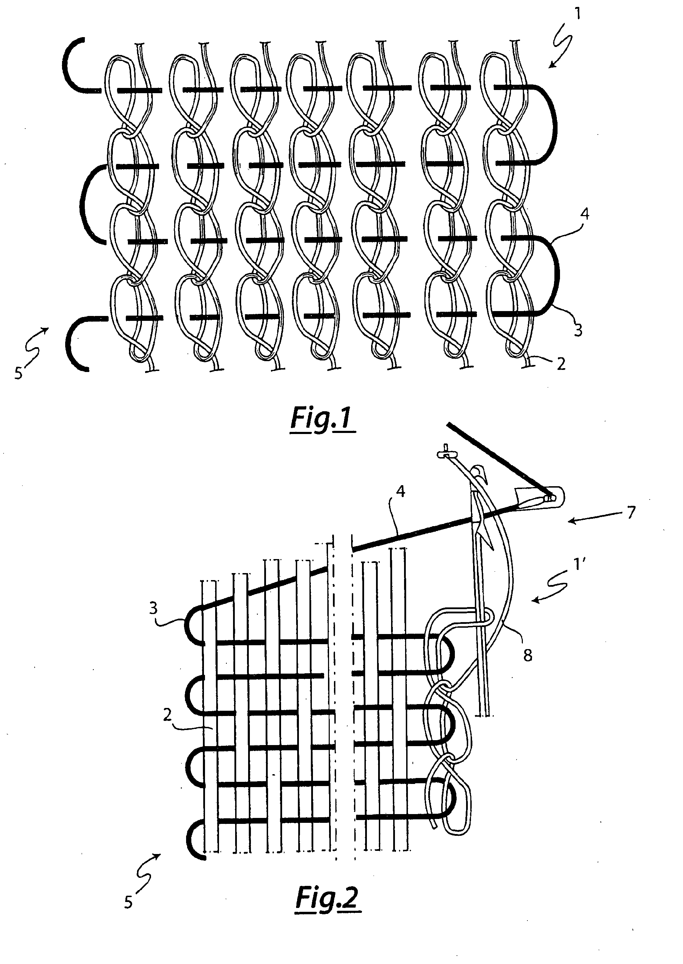

With reference to figure 1, framework 1 is woven and comprises a warp 2 made of polyester material and a weft 3 made using a yarn 4 made of synthetic material.

The framework is woven to form a strip 5 having a defined length L, and yarn 4 made of synthetic material is shaped to form a coil 6 having a width substantially equivalent to width L of strip 5.

Strip 5 is crocheted and has warp 2 knitted to yarn 4 made of synthetic material. Warp 2 has rows parallel to each other and to strip 5, and the number of rows as well as the mutual arrangement thereof, also depend on the structural requirements that framework 1 should have when being used.

Figure 2 illustrates a variant of the framework 1, wherein strip 5 is woven on a needle loom, in which warp 2 is moved by heddles and it is formed by a plurality of threads parallel to each other and to strip 5, and yarn 4 made of synthetic material is weft by means of an underpick 7 with two-by-two wefts.

Furthermore strip 5 comprises a support thread 8 for binding yarn 4 made of synthetic material withheld, during weaving, by a needle.

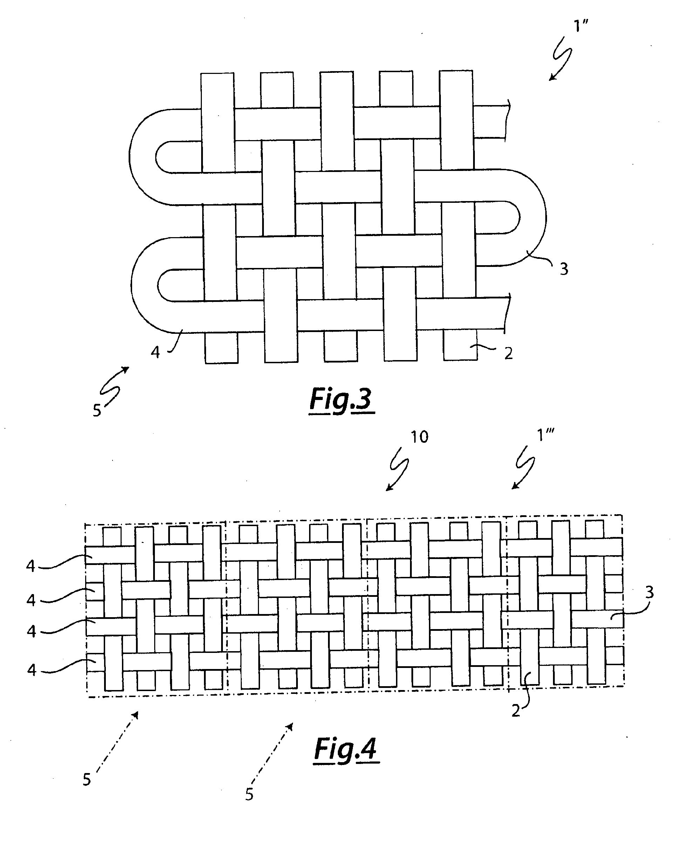

Figure 3 illustrates a further variant of the known framework, wherein strip 5 is woven by means of a shuttle loom, i.e. warp 2 is moved by heddles and it is formed by a plurality of threads parallel to each other and to strip 5, while yarn 4 made of synthetic material is inserted by means of a shuttle, which - moving from left to right - inserts only one weft thread at a time.

Yarn 4 is made of a thread made of synthetic material, of the single thread or monofilament type.

Furthermore, in the previously described frameworks the use of a bonding agent can be provided for in order to integrally join warp 2 and weft 3 to each other with the aim of preventing mutual sliding.

Figure 4 illustrates a framework with warp 2 made of polyester material and a weft 3 made using a yarn 4 made of synthetic material, and it is woven according to wide piece of fabric 10 on any type of loom instead of having weft 3 configured to form a coil 6 as previously described.

Fabric 10 is subsequently cut into strips or ribbons 5', having a predetermined width and suitable for the use they are intended for.

However, the framework of the known type is difficult to handle during folding, often resulting in the obtained shape being not constant on the length of strip 5.

Thus, an object of the present invention is to describe a gasket framework which is free of the previously described drawbacks.

According to the present invention a method for producing gasket framework as claimed in claim 1 is described.

According to the present invention a gasket framework as claimed in claim eight is provided.

Finally, according to the present invention a device for producing frameworks for gaskets as claimed in claim sixteen is provided.

Now, the invention will be described with reference to the attached drawings, which illustrate a non-limiting example, wherein:
- figure 1 illustrates a schematic view of a first gasket framework of the known type;
- figure 2 illustrates a schematic view of a second gasket framework of the known type;
- figure 3 illustrates a schematic view of a third gasket framework of the known type;
- figure 4 illustrates a schematic view of a fourth gasket framework of the known type;
- figure 5 and figure 6 illustrate respective schematic views of a gasket framework according to the present invention;
- figure 7 and figure 8 illustrate a part of a yarn of the framework according to the present invention respectively before and after a calendering process;
- figure 9 illustrates part of a machine for producing the framework subject of the present invention;
- figure 10 illustrates a schematic view of a machine for producing the framework subject of the present invention;
- figure 11 illustrates a sectional view of figure 6 along lines XI-XI.

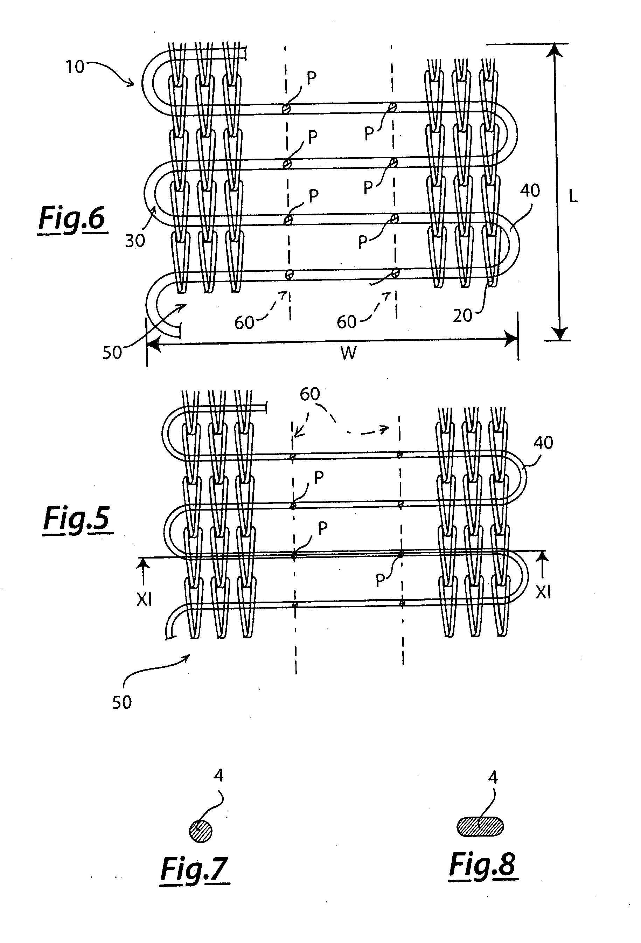

With reference to figure 5, a gasket framework is indicated in its entirety with 10. Framework 10 comprises a warp 20 made of polyester material and a weft 30 made using a yarn 40 made of semi-rigid synthetic material.

Framework 10 is woven to form a strip 50 having a length L, in which yarn 40 made of synthetic material is shaped to form a coil 45 whose width is substantially equivalent to a width w of strip 50.

Strip 50 can be crocheted, on a needle loom, i.e. in which warp 20 is moved by a plurality of needles and it is formed by a plurality of threads parallel to each other and to strip 50 and wherein yarn 40 made of synthetic material is weft by means of an underpick, or still as a wide piece.

Strip 50, at the end of the production thereof, is embedded in rubber or synthetic material (such as for example and not only limited to plastic) to form a rigid gasket susceptible of being applied on motor-vehicles or even on domestic appliances, though such two applications shall not be deemed restrictive in any manner whatsoever.

Yarn 40, as represented in figures 5 and 7, can have a cylindrical section, dimensioned so as to be sufficiently resistant to traction or however to forces applied thereto depending on the use application.

However, strip 50, with yarn 40, having cylindrical section, is often too thick for the required application. Yarn 40 made of synthetic material is actually the element with largest diameter with respect to warp thread 20.

The alternative of reducing the diameter of yarn 40 must be excluded, given that reducing the diameter also implies reducing the mechanical resistance characteristics, which could lead to obtaining a gasket no longer meeting the design requirements.

Thus, yarn 40 is calendered, i.e. subjected to a compression process (typically by means of two rollers).

As illustrated in figures 6 and 8, yarn 40 is thus made to acquire a compressed form, in which the section thereof has a first greater axis and a second smaller axis.

Observing strip 50 in plan view, i.e. in a direction orthogonal to the maximum length thereof, it should be observed that in the case of yarn 40 subjected to calendering, the first greater axis of the section of yarn 40 substantially lies on the plane of strip 50, hence appearing larger with respect to non-calendered yarn 40. Vice versa, the second smaller axis of the section of yarn 40 is oriented on a plane orthogonal to a plane of strip 50, hence the thickness of the latter is smaller with respect to the case in which yarn 40 is not subjected to calendering.

The advantage of using the calendering of yarn 40 and arranging it as illustrated above, is thus double and combined: the thickness of strip 50 is reduced and, simultaneously, the mechanical resistance characteristics of the yarn are maintained constant.

Yarn 40 is also compressed in a portion thereof; so as to be able to allow strip 50 a greater ease of the folding thereof to form a U-shape.

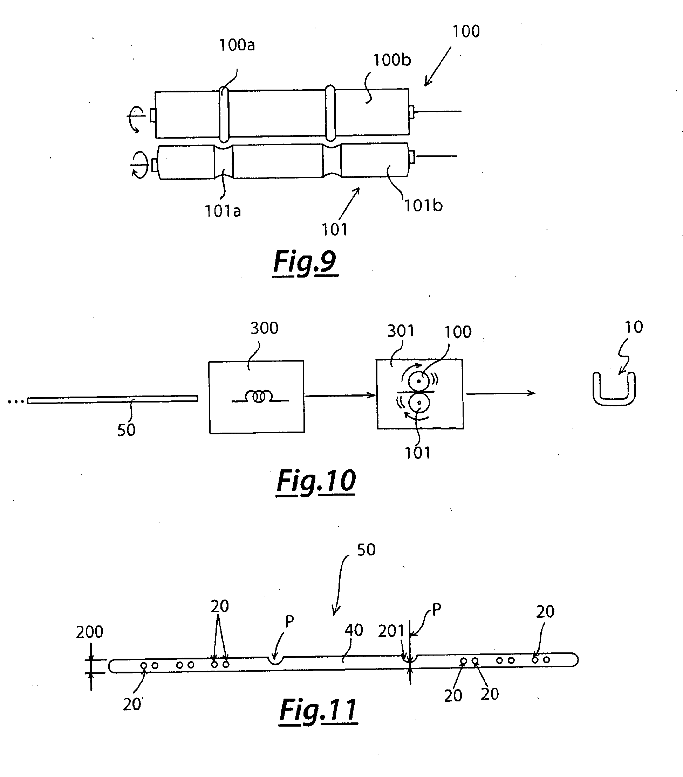

As illustrated in figures 5 and 6, strip 50 has a yarn 40 made of synthetic material which is compressed into a plurality of points P, lying on a plurality of ideal lines 60 parallel to each other and also parallel to the direction of maximum extension of strip 50. The thickness of yarn 40 made of synthetic material is further reduced at points P, as illustrated in figure 11, by a first thickness 200 and a second thickness 201 smaller than the first thickness.

In detail, figures 5 and 6 illustrate two ideal lines 60, for example susceptible to allow folding strip 50 to form a U-shape; however, the number of lines illustrated therein shall not be deemed restrictive in any manner whatsoever, given that there can for example be provided three ideal lines 60, still parallel to each other, useful for example for facilitating folding strip 50 to form an S-shape along the direction of maximum extension thereof.

Thus, the two ideal lines 60 define the lines along which strip 50 will be folded to form the U-shape concavity of the final shape thereof to be subsequently embedded in rubber.

In order to execute the plurality of compression points P, a machine for the production of strip 50 further comprises, besides the loom, also a compression stage 300 which in turn comprises a pair of rollers 100, 101 superimposed on each other and counter-rotating.

The pair of rollers 100, 101 comprises a first upper roller 100 and a second lower roller 101; the first upper roller 100 has a pair of annular elements 100a projecting with respect to a lateral surface 100b thereof; the second lower roller 101 has a pair of annular recesses 101a recessed with respect to a lateral surface 100b thereof.

In a production step, strip 50 is passed through a hole comprised between the first upper roller 100 and the second lower roller 101; through the combined action of annular elements 100a which counter with the annular recesses 100b (having a smaller recess depth with respect to the axial extension of the projections of annular elements 100a), yarn 40 is compressed along two lines, which are ideal lines 60.

The compression action is either hot or cold performed: in case of hot compression, the machine for producing strip 50, besides compression stage 300 (figure 10), further comprises a heating stage 301, arranged upstream of compression stage 300; such heating stage 301 has heating means, preferably electrical, specifically designed for heating strip 50 (typically, but not exclusively, at a temperature of about 180°). In this way, yarn 40 can be softened to facilitate compression thereof.

Other systems for providing points P are not excluded; for example points P can be alternatively provided through cutting by means of a laser device. In this case, compression stage 300 is equivalently replaced by a cutting stage 300', in which the laser slightly cuts yarn 40 made of synthetic material, maintaining as much as possible - the mechanical resistance unaltered. Also in this case, at cutting points P, yarn 40 made of synthetic material assumes a second thickness 201 lower than the first thickness 200.

Using cutting stage 300', the heating of strip 50 is also automatically carried out; however, the step of heating the strip occurs simultaneously with the cutting step.

The advantages of the framework subject of the present invention are known in the light of the description above. In particular, it is easier to fold, so as to allow taking on for example but not exclusively a U or S shape to be subsequently coated with rubber or plastic and thus, upon completing the creation of end gasket 10, coupled to the body of a motor-vehicle. The step of reducing the localised thickness of yarn 40, which, as described, can be a cutting or compression step, allows facilitating folding thereof.

Furthermore, the framework subject of the present invention is easier to fold; this result in the possibility of providing large amounts of strip 50 on a flat reel, then allowing the U-shaped folding even later.

The invention here described can be subjected to various additional variants and embodiments, obvious to a man skilled in the art, without departing from the scope of protection outlined by the attached claims.

## Claims

1. Method for producing a gasket framework (10), comprising a step of creating a strip (50) comprising a warp (20) and a weft (30) obtained using a yarn (40) made of semi-rigid synthetic material and susceptible of being folded; said method is **characterised in that** it comprises a step for localised thickness reduction and facilitating the folding of said yarn (40) into a plurality of points (P) of said yarn (40) made of synthetic material; said plurality of points (P) lying on a plurality of ideal parallel lines (60).

2. Method according to claim 1, wherein said step of localised thickness reduction is a compression step; said compression step comprises passing said strip (50) between a pair of rollers (100, 101) respectively having a pair of projecting elements (100a) and a pair of recessed elements (101a) with respect to a lateral surface (101b, 100b) of said rollers (100, 101).

3. Method according to claim 1, further comprising a step of heating said strip (50).

4. Method according to claim 3, wherein said step of heating said strip (50) performs an action of softening said yarn (40) made of synthetic material.

5. Method according to claim 1, wherein said thickness reduction step is a cutting step; said cutting step comprising a localised cutting of said yarn (40) into a plurality of cutting points (P).

6. Method according to claim 1, wherein said yarn (40) comprises a first thickness (200) and in said plurality of points (P) said yarn (40) has a second thickness (201) lower than said first thickness (200).

7. Method according to any one of the preceding claims, wherein said strip (50) is U-folded at said plurality of points (P).

8. Gasket framework (10), comprising a strip, (50) comprising a warp (20) and a weft (30) made using a yarn (40) made of synthetic material; said framework is **characterised in that** said yarn (40) made of synthetic material comprises a plurality of compression or cutting points (P) and **in that** said yarn (40) is semi-rigid and susceptible of being folded; said plurality of points (P) lying on a plurality of ideal parallel lines (60).

9. Gasket framework according to claim 8, wherein said yarn (40) has a first thickness (200) and wherein at said plurality of compression points (P) said yarn (40) has a second thickness (201) lower than said first thickness (200).

10. Gasket framework according to claim 9, wherein said points (P) are points for the U or S-shaped folding of said strip (50).

11. Framework according to any one of the preceding claims 8-10, wherein said yarn (40) made of synthetic material is shaped to form a coil (60) with width equivalent to a width W of said strip (50).

12. Framework according to any one of claims 8-11, wherein said yarn (40) made of synthetic material has a cylindrical section.

13. Framework according to any one of the preceding claims 8-11, wherein said yarn (40) is calendered and comprises a section having a first greater axis and a second smaller axis.

14. Framework according to claim 13, wherein said first greater axis lies on a plane on which said strip (50) lies, and wherein said smaller axis is oriented on an orthogonal plane with respect to a plane on which said strip (50) lies.

15. Framework according to claim 8, wherein said ideal parallel lines (60) are parallel to a direction of maximum extension of the strip (50).

16. Device for producing a gasket framework according to claims 8-15; said device comprising a loom and a thickness reduction stage (300, 300'), said thickness reduction stage (300, 300') comprising means for the localised reduction of the thickness of a yarn (40) made of synthetic material, configured for reducing the thickness of said yarn (40) along a plurality of ideal lines (60) arranged parallel.

17. Device according to claim 16, wherein said thickness reduction stage (300, 300') is a compression stage (300) and comprises a pair of superimposed and counter-rotating rollers (100, 101); said pair of rollers (100, 101) comprising a first roller (100) provided with a pair of annular elements (100a) projecting with respect to a lateral surface (100b) thereof.

## Patentansprüche

1. Verfahren zum Herstellen eines Dichtungsrahmens (10), das einen Schritt zum Erzeugen eines Streifens (50) umfasst, der einen Kettfaden (20) umfasst und einen Schussfaden (30), der unter Verwendung eines Garns (40) erhalten wird, das aus einem halbsteifen synthetischen Material gefertigt ist und in der Lage ist, umgebogen zu werden; wobei das Verfahren **dadurch gekennzeichnet ist, dass** es einen Schritt zur örtlich beschränkten Dickenreduktion, der das Falten des Garns (40) zu einer Mehrzahl von Punkten (P) des Garns (40) aus synthetischem Material ermöglicht, umfasst; wobei die Mehrzahl von Punkten (P) auf einer Mehrzahl von idealen parallelen Linien (60) liegt.

2. Verfahren nach Anspruch 1, wobei der Schritt zur örtlich beschränkten Dickenreduktion ein Druckschritt ist; wobei der Druckschritt das Hindurchführen des Streifens (50) zwischen einem Paar Walzen (100, 101) umfasst, die jeweils ein Paar hervorstehender Elemente (100a) und ein Paar vertiefter Elemente (101 a) bezogen auf eine Seitenfläche (101b, 100b) der Walzen (100, 101) aufweisen.

3. Verfahren nach Anspruch 1, ferner umfassend einen Schritt des Erwärmens des Streifens (50).

4. Verfahren nach Anspruch 3, wobei bei dem Schritt des Erwärmens des Streifens (50) ein Vorgang des Erweichens des Garns (40) aus synthetischem Material erfolgt.

5. Verfahren nach Anspruch 1, wobei der Dickenreduktionsschritt ein Schneidschritt ist; wobei der Schneidschritt ein örtlich beschränktes Schneiden des Garns (40) in eine Mehrzahl von Schneidpunkten (P) umfasst.

6. Verfahren nach Anspruch 1, wobei das Garn (40) eine erste Dicke (200) umfasst und das Garn (40) in der Mehrzahl von Punkten (P) eine zweite Dicke (201) aufweist, die geringer als die erste Dicke (200) ist.

7. Verfahren nach einem der vorhergehenden Ansprüche, wobei der Streifen (50) an der Mehrzahl von Punkten (P) U-förmig umgebogen ist.

8. Dichtungsrahmen (10), umfassend einen Streifen (50), der einen Kettfaden (20) und einen Schussfaden (30) umfasst, der unter Verwendung eines Garns (40) gefertigt ist, das aus synthetischem Material gefertigt ist; wobei der Rahmen **dadurch gekennzeichnet ist, dass** das Garn (40) aus synthetischem Material eine Mehrzahl von Druck- oder Schneidpunkten (P) umfasst und dadurch, dass das Garn (40) halbsteif ist und in der Lage ist, umgebogen zu werden; wobei die Mehrzahl von Punkten (P) auf einer Mehrzahl von idealen parallelen Linien (60) liegt.

9. Dichtungsrahmen nach Anspruch 8, wobei das Garn (40) eine erste Dicke (200) aufweist und wobei das Garn (40) an der Mehrzahl von Druckpunkten (P) eine zweite Dicke (201) aufweist, die geringer als die erste Dicke (200) ist.

10. Dichtungsrahmen nach Anspruch 9, wobei es sich bei den Punkten (P) um Punkte für das U- oder S-förmige Umbiegen des Streifens (50) handelt.

11. Rahmen nach einem der vorhergehenden Ansprüche 8 bis 10, wobei das Garn (40) aus synthetischem Material zu einer Schlangenform (60) mit einer Breite mit dem gleichen Wert wie eine Breite W des Streifens (50) geformt ist.

12. Rahmen nach einem der Ansprüche 8 bis 11, wobei das Garn (40) aus synthetischem Material einen zylindrischen Abschnitt aufweist.

13. Rahmen nach einem der vorhergehenden Ansprüche 8 bis 11, wobei das Garn (40) kalandriert ist und einen Abschnitt mit einer ersten größeren Achse und einer zweiten kleineren Achse umfasst.

14. Rahmen nach Anspruch 13, wobei die erste größere Achse in einer Ebene liegt, in der der Streifen (50) liegt, und wobei die kleinere Achse in einer senkrechten Ebene bezogen auf eine Ebene ausgerichtet ist, in der der Streifen (50) liegt.

15. Rahmen nach Anspruch 8, wobei die idealen parallelen Linien (60) parallel zu einer Richtung der maximalen Ausdehnung des Streifens (50) verlaufen.

16. Vorrichtung zur Herstellung eines Dichtungsrahmens nach Anspruch 8 bis 15; wobei die Vorrichtung eine Webmaschine und eine Dickenreduktionsstufe (300, 300') umfasst, wobei die Dickenreduktionsstufe (300, 300') Mittel für die örtlich beschränkte Dickenreduktion eines Garns (40) aus synthetischem Material umfasst, die so ausgelegt sind, dass sie die Dicke des Garns (40) entlang einer Mehrzahl von parallel angeordneten idealen Linien (60) reduzieren.

17. Vorrichtung nach Anspruch 16, wobei die Dickenreduktionsstufe (300, 300') eine Druckstufe (300) ist und ein Paar übereinander angeordneter und gegenläufiger Walzen (100, 101) umfasst; wobei das Paar Walzen (100, 101) eine erste Walze (100) umfasst, die mit einem Paar ringförmiger Elemente (100a) versehen ist, die bezogen auf eine Seitenfläche (100b) davon hervorstehen.

## Revendications

1. Procédé de production d'une structure d'étanchéité (10), comprenant une étape consistant à créer une bande (50) comprenant une chaîne (20) et une trame (30) obtenues à l'aide d'un fil (40) composé d'une matière synthétique semi-rigide et susceptible d'être pliée ; ledit procédé est **caractérisé en ce qu'**il comprend une étape de réduction localisée de l'épaisseur et consistant à faciliter le pliage dudit fil (40) en une pluralité de points (P) dudit fil (40) composé de matière synthétique ; ladite pluralité de points (P) étant située sur une pluralité de lignes parallèles idéales (60).

2. Procédé selon la revendication 1, dans lequel ladite étape de réduction localisée de l'épaisseur consiste en une étape de compression ; ladite étape de compression comprend le passage de ladite bande (50) entre une paire de rouleaux (100, 101) ayant respectivement une paire d'éléments faisant saillie (100a) et une paire d'éléments en creux (101a) par rapport à une surface latérale (101b, 100b) desdits rouleaux (100, 101).

3. Procédé selon la revendication 1, comprenant en outre une étape de chauffage de ladite bande (50).

4. Procédé selon la revendication 3, dans lequel ladite étape de chauffage de ladite bande (50) réalise une action de ramollissement dudit fil (40) composé de matière synthétique.

5. Procédé selon la revendication 1, dans lequel ladite étape de réduction de l'épaisseur est une étape de découpe ; ladite étape de découpe comprenant une découpe localisée dudit fil (40) en une pluralité de points de découpe (P).

6. Procédé selon la revendication 1, dans lequel ledit fil (40) comprend une première épaisseur (200) et dans ladite pluralité de points (P) ledit fil (40) a une seconde épaisseur (201) inférieure à ladite première épaisseur (200).

7. Procédé selon l'une quelconque des revendications précédentes, dans lequel ladite bande (50) est pliée en U au niveau de ladite pluralité de points (P).

8. Structure d'étanchéité (10) comprenant une bande (50) comprenant une chaine (20) et une trame (30) obtenues à l'aide d'un fil (40) composé d'une matière synthétique ; ladite structure est **caractérisée en ce que** ledit fil (40) composé de matière synthétique comprend une pluralité de points de compression ou de découpe (P) et **en ce que** ledit fil (40) est semi-rigide et susceptible d'être plié ; ladite pluralité de points (P) étant située sur une pluralité de lignes parallèles idéales (60).

9. Structure d'étanchéité selon la revendication 8, dans laquelle ledit fil (40) a une première épaisseur (200) et dans laquelle au niveau de ladite pluralité de points de compression (P) ledit fil (40) a une seconde épaisseur (201) inférieure à ladite première épaisseur (200).

10. Structure d'étanchéité selon la revendication 9, dans laquelle lesdits points (P) sont des points permettant le pliage en forme de U ou en forme de S de ladite bande (50).

11. Structure selon l'une quelconque des revendications précédentes 8 à 10, dans laquelle la forme dudit fil (40) composé de matière synthétique est prévue pour constituer une bobine (60) dont la largeur est équivalente à une largeur W de ladite bande (50).

12. Structure selon l'une quelconque des revendications 8 à 11, dans laquelle ledit fil (40) composé de matière synthétique a une section cylindrique.

13. Structure selon l'une quelconque des revendications précédentes 8 à 11, dans laquelle ledit fil (40) est laminé et comprend une section ayant un premier grand axe et un second petit axe.

14. Structure selon la revendication 13, dans laquelle ledit premier grand axe se situe dans un plan dans lequel se trouve ladite bande (50), et dans laquelle ledit petit axe est orienté suivant un plan orthogonal à un plan dans lequel se trouve ladite bande (50).

15. Structure selon la revendication 8, dans laquelle lesdites lignes parallèles idéales (60) sont parallèles à une direction d'allongement maximum de la bande (50).

16. Dispositif de production d'une structure d'étanchéité selon les revendications 8 à 15 ; ledit dispositif comprenant un métier et une étape de réduction de l'épaisseur (300, 300'), ladite étape de réduction de l'épaisseur (300, 300') comprenant des moyens permettant la réduction localisée de l'épaisseur d'un fil (40) composé de matière synthétique, configuré de manière à réduire l'épaisseur dudit fil (40) le long d'une pluralité de lignes idéales (60) agencées pour être parallèles les unes aux autres.

17. Dispositif selon la revendication 16, dans lequel ladite étape de réduction de l'épaisseur (300, 300') est une étape de compression (300) et comprend une paire de rouleaux superposés et contrarotatifs (100, 101) ; ladite paire de rouleaux (100, 101) comprenant un premier rouleau (100) muni d'une paire d'éléments annulaires (100a) qui font saillie par rapport à une surface latérale (100b) de celui-ci.
